Europäisches Patentamt

European Patent Office

Office européen des brevets

(19)

(11) Veröffentlichungsnummer: **0 453 408 A1**

# (12) EUROPÄISCHE PATENTANMELDUNG

(21) Anmeldenummer: 91810275.7

(22) Anmeldetag: 12.04.91

(51) Int. Cl.⁵: **B31B 19/90, B29C 67/22**

(30) Priorität: 20.04.90 CH 1341/90

(43) Veröffentlichungstag der Anmeldung:
23.10.91 Patentblatt 91/43

(84) Benannte Vertragsstaaten:
CH DE FR GB IT LI

(71) Anmelder: SIG Schweizerische
Industrie-Gesellschaft
CH-8212 Neuhausen am Rheinfall (CH)

(72) Erfinder: Wehle, Peter
Rabenfluhstrasse 4
CH-8212 Neuhausen am Rheinfall (CH)

(74) Vertreter: Münch, Otto et al
Patentanwalts-Bureau Isler AG,
Stampfenbachstrasse 48
CH-8006 Zürich (CH)

(54) **Vorrichtung zum Einschweissen eines aus zwei Teilen bestehenden Verschliessstreifens zwischen zwei thermoplastische Folien.**

(57) Die Vorrichtung hat zwei metallische Trägerkörper (41,61), die gegeneinander bewegbar sind. Am einen Körper (41) sind zwei parallele Heizbänder (42,43) und am andern Körper (61) im gleichen Abstand voneinander ein Heizband (57) und ein elastisches Materialband (58) angeordnet. Damit können in einem einzigen Schritt gleichzeitig zwei thermoplastische Folien (2,3) mit einem lösbaren Verschliessstreifen (4) verschweisst und mit einer schälbaren Schweissnaht (5) versehen werden.

EP 0 453 408 A1

Fig. 4

Eine Vorrichtung gemäss Oberbegriff des Anspruchs 1 ist aus dem DE-GM 88 03 021 bekannt. Bei dieser bekannten Vorrichtung wird eine thermoplastische Folie taktweise um eine Beutellänge vorwärts bewegt. Zunächst werden auf die Folie nebeneinander die beiden Glieder eines Verschliessstreifens aufgeschweisst. Hierauf wird die Folie zu einem Schlauch geformt und mit einer Längssiegelnaht versehen. Anschliessend wird gleichzeitig oberhalb des nun geschlossenen Verschliessstreifens eine schälbare Schweissnaht und darüber eine Quersiegelnaht geschweisst. Nach dem Schweissen der Quersiegelnaht wird der oberhalb dieser Naht befindliche Schlauchteil mit einer abgemessenen Portion des Füllgutes gefüllt und die Folie um den nächsten Schritt weitertransportiert. Für die Lagerung und den Transport sind die so hergestellten Beutel durch die schälbare Schweissnaht hermetisch versiegelt. Nach Oeffnen des Beutels kann dieser durch den Verschliessstreifen wieder verschlossen werden. Nachteilig an dieser bekannten Vorrichtung ist, dass sie kompliziert aufgebaut ist und relativ langsam arbeitet.

Der vorliegenden Erfindung liegt die Aufgabe zugrunde, eine Vorrichtung der eingangs genannten Art derart auszubilden, dass sie kompakt und leistungsfähig ist. Diese Aufgabe wird durch die kennzeichnenden Merkmale des Anspruchs 1 gelöst.

Aus der US-PS 4,630,429 ist es an sich bekannt, bei einem Folienschlauch zwei nebeneinander liegende Quer-Schweissnähte gemeinsam zu schweissen und den Schlauch zwischen diesen Schweissnähten zu trennen.

Nachfolgend wird ein Ausführungsbeispiel der Erfindung anhand der Zeichnung erläutert. Darin zeigt:

Fig. 1 eine perspektivische Ansicht eines mit einer erfindungsgemässen Vorrichtung hergestellten Beutels,

Fig. 2 einen vergrösserten Querschnitt durch den Verschluss des Beutels nach Fig. 1,

Fig. 3 eine schematische Seitenansicht einer erfindungsgemässen Vorrichtung,

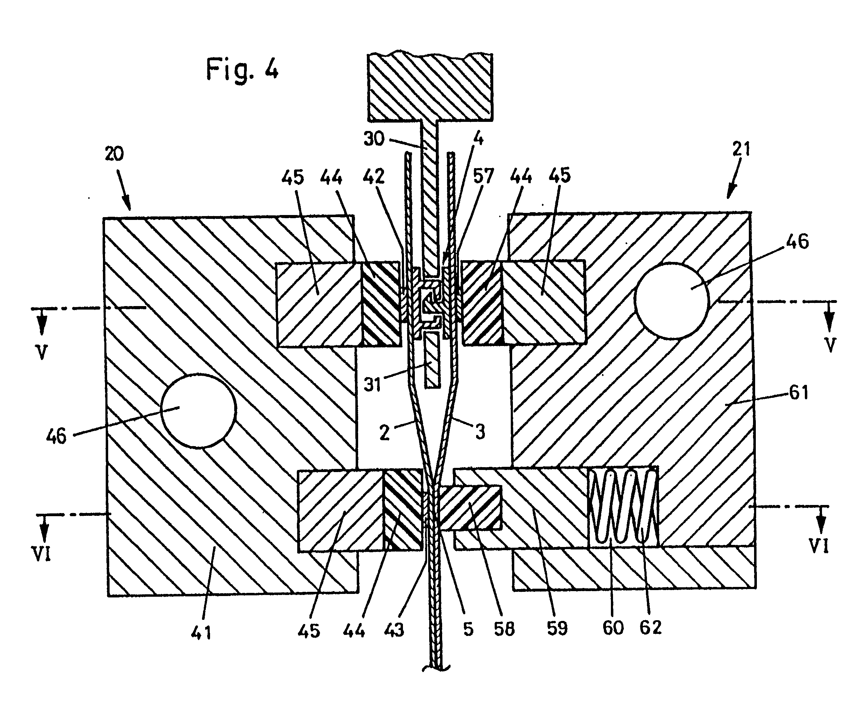

Fig. 4 einen Querschnitt durch die Siegeleinrichtung,

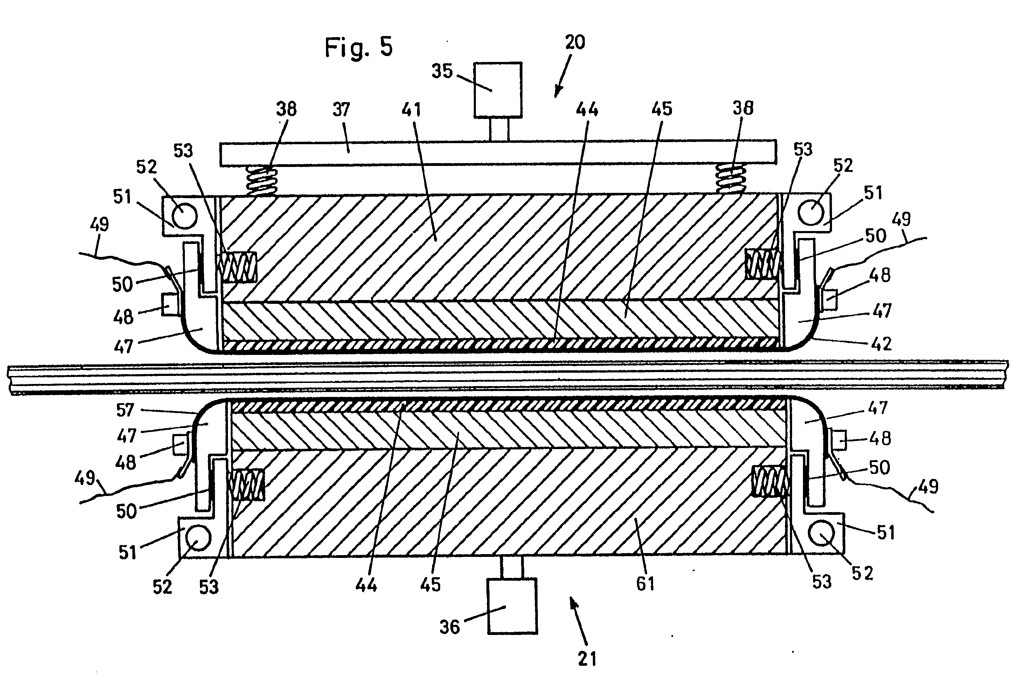

Fig. 5 einen Schnitt längs der Linie V - V in Fig. 4, und

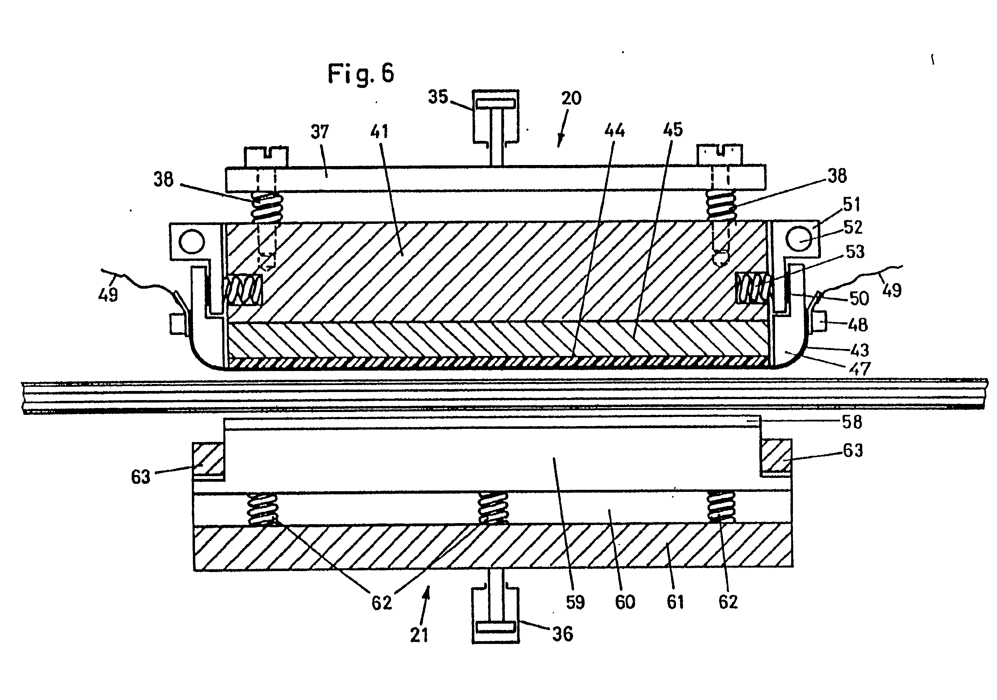

Fig. 6 einen Schnitt längs der Linie VI - VI in Fig. 4.

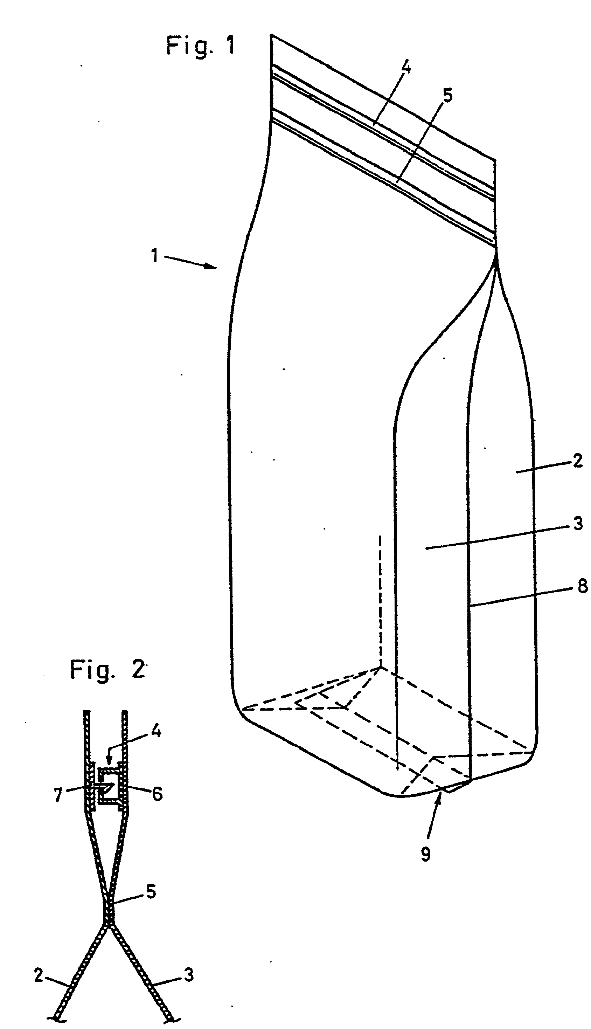

Der Beutel nach Fig. 1 und 2 ist gebildet aus zwei Polyäthylenfolien 2, 3. Er ist oben durch einen Verschliessstreifen 4 und eine Schälnaht 5 verschlossen. Der Verschliessstreifen 4 besteht aus zwei ineinander geschnappten Profilen 6, 7 ebenfalls aus Polyäthylen. Die beiden Folien 2, 3 sind seitlich durch je eine Längssiegelnaht 8 und unten durch einen Stirnseitenverschluss 9 bekannter Art hermetisch versiegelt.

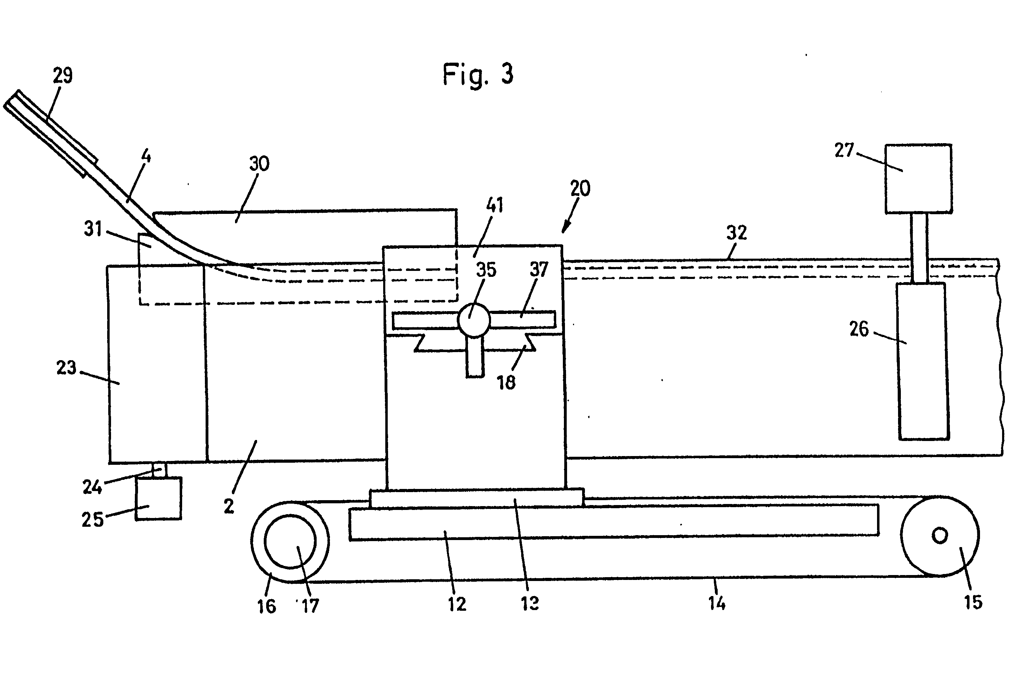

Die Vorrichtung nach Fig. 3 umfasst einen horizontal längs einer Schiene 12 fahrbaren Schlitten 13.

Am Schlitten 13 sind die beiden Enden eines Zahnriemens 14 befestigt, der über zwei Zahnräder 15, 16 geführt ist. Das Zahnrad 16 ist durch einen Servomotor 17 angetrieben. In je einer Schwalbenschwanzführung 18 sind am Schlitten 13 zwei Siegeleinrichtungen 20, 21 quer zur Längsrichtung der Schiene 12 gegeneinander verschiebbar. Die Folien 2, 3 werden von je einer Vorratsrolle 23 abgezogen, die durch einen drehbaren Dorn 24 gehalten und mittels einer Bremse 25 gebremst ist. Die Folien sind zwischen den Vorratsrollen 23 und einem Paar von Abzugswalzen 26, von dem lediglich die eine sichtbar ist, gespannt. Die Abzugswalzen 26 werden durch einen Motor 27 kontinuierlich angetrieben. Der Verschliessstreifen 4 wird ebenfalls von einer Vorratsrolle 29 abgezogen und wird durch zwei Leitbleche 30, 31 zwischen die Folien 2, 3 benachbart deren oberem Rand 32 eingeführt.

Die beiden Siegeleinrichtungen 20, 21 sind in den Führungen 18 durch je einen Pneumatikzylinder 35, 36 zwischen zwei nicht dargestellten Anschlägen verschiebbar. Der Zylinder 35 wirkt dabei über einen Balken 37 und vorgespannte Federn 38 auf die Einrichtung 20. Die Vorspannung der Federn 38 bestimmt damit die Anpresskraft während der Siegelung. Die Siegeleinrichtung 20 besteht aus einem metallischen Trägerkörper 41 und zwei zueinander und zur Schiene 12 parallelen Heizbändern 42, 43. Die Heizbänder 42, 43 liegen auf je einem elastischen Kunststoff-Band 44, zum Beispiel aus einem teflonbeschichteten Silikon-Elastomer oder aus glasfaserverstärktem Kunststoff auf. Die Bänder 44 sind auf je einer Schiene 45, zum Beispiel aus Kupfer, aufgeklebt. Die Schienen 45 sind im Trägerkörper 41 eingesetzt, der eine Bohrung 46 für den Durchfluss eines Kühlmediums hat. An beiden Enden sind die biegsamen Heizbänder 41, 42 über eine zylindersegmentförmige Fläche eines Schuhs 47 geführt und durch Schrauben 48 am Schuh 47 eingespannt. Jedes Ende ist über eine Anschlussleitung 49 mit einer nicht dargestellten, gesteuerten Stromquelle verbunden. Die Schuhe 47 sind über eine Isolationsschicht 50 mit einem Schwenkarm 51 verbunden, der um eine senkrecht zur Längserstreckung des Heizbandes angeordnete Achse 52 schwenkbar und durch eine Feder 53 vorbelastet ist. Die Federn 53 spannen das Heizband 42, 43 und gleichen seine Längenänderung beim impulsartigen Aufheizen und der anschliessenden Abkühlung aus.

Bei der Siegeleinrichtung 21 sind für gleiche Teile gleiche Bezugzeichen verwendet, so dass sich eine detaillierte Beschreibung dieser Teile erübrigt. Die Einrichtung 21 unterscheidet sich von der Einrichtung 20 dadurch, dass sie nur ein Heizband 57 hat. Im gleichen, mittleren Abstand wie die Heizbänder 42, 43 voneinander ist unterhalb des Heizbandes 57 ein elastisches Materialband 58 z.B. aus einem Silikon-Elastomer in einer Schiene 59 eingesetzt. Das Band 58 steht gegenüber dem Heizband 57 vor. Die Schiene 59 ist in einer Nut 60 des Trägerkörpers 61 senkrecht zur Längserstreckung des Bandes 58 und parallel zur Führung 18 gegen die Kraft von vorgespannten Federn 62 verschiebbar. Die Federn 62 drücken die Schiene 59 gegen Anschläge 63.

Im Betrieb arbeitet die beschriebene Vorrichtung wie folgt: Das Walzenpaar 26 zieht die Folien 2, 3 und den Verschliessstreifen 4 kontinuierlich von den Vorratsrollen 23, 29 ab. Der Schlitten 13 wird durch den Servomotor 17 hin und her bewegt, wobei seine Bewegungsgeschwindigkeit in Folienabzugrichtung genau der Abzugsgeschwindigkeit angepasst ist. Sobald die Schlittenbewegung in Abzugrichtung eingeleitet ist, werden die beiden Zylinder 35, 36 betätigt und die beiden Siegeleinrichtungen 20, 21 in den Führungen 18 gegeneinander gefahren. Die Heizbänder 42, 57 und das Heizband 43 und das Band 58 pressen nun mit der durch die Federn 38 eingestellten Kraft gegeneinander, wobei die Kraftaufteilung durch die Vorspannung der Federn 62 gegeben ist. Nun wird an die Leitungen 49 impulsartig Strom angelegt, so dass sich die Heizbänder 42, 43, 57 auf die für die Siegelung erforderliche Temperatur erhitzen. Der Impuls auf das Heizband 43 ist dabei etwas kürzer, damit die Siegelnaht 5 schälbar wird und nicht voll durchschweisst. Der Anpressdruck wird solange aufrecht erhalten, bis die Siegelnähte hinreichend abgekühlt sind, damit die erforderliche Festigkeit der Nähte gewährleistet ist. Hierauf werden die Trägerkörper 41, 61 mittels der Zylinder 35, 36 auseinander gefahren und der Schlitten 13 zurückgefahren, so dass unmittelbar an die fertiggestellten Siegelnähte anschliessend im nächsten Schritt die nächsten Nähte gesetzt werden können.

Stromabwärts der Abzugswalzen 26 werden die Längsnähte 8 durch eine herkömmliche Einrichtung z.B. gemäss US-PS 4,630,429 gebildet und die einzelnen Beutel voneinander getrennt. Die Beutel werden von ihrer noch offenen Unterseite her gefüllt und schliesslich in ebenfalls herkömmlicher Weise der Stirnseitenverschluss 9 gebildet.

Die beschriebene Vorrichtung hat den Vorteil, dass in einem einzigen Arbeitsgang sowohl die Schälnaht 5 gebildet, als auch der Verschliessstreifen 4 eingeschweisst werden kann. Weil anschliessend in der Verpackungsmaschine Einzelbeutel gefüllt werden, kann das Füllgut genauer dosiert werden als z.B. bei der Vorrichtung nach DE-GM 88 03 021. Zudem kann die Herstellgeschwindigkeit der Beutel wesentlich erhöht werden, weil sie nicht durch den Einfüllvorgang beschränkt ist. Die erfindungsgemässe Vorrichtung hat überdies gegenüber dieser bekannten Vorrichtung den Vorteil, dass die Verschliessstreifen der hergestellten Beutel dichter schliessen, weil sie über die ganze Breite des Beutels durchgehen und an ihren Enden mit den Längsnähten 8 verschlossen sind, was bei den Beuteln gemäss DE-GM 88 03 021 nicht möglich ist.

## Patentansprüche

1. Vorrichtung zum Einschweissen eines aus zwei Teilen (6,7) bestehenden Verschliessstreifens (4) zwischen zwei thermoplastische Folien (2,3) und zum Verschweissen der beiden Folien (2,3) miteinander, bestehend aus zwei zusammenwirkenden Siegeleinrichtungen (20,21), dadurch gekennzeichnet, dass die erste Siegeleinrichtung (20) aus einem ersten metallischen Trägerkörper (41) mit zwei parallel angeordneten Heizbändern (42,43) besteht, und dass die zweite Siegeleinrichtung (21) aus einem zweiten metallischen Trägerkörper (61) mit einem darauf angeordneten dritten Heizband (57) und einem parallel zu diesem angeordneten elastischen Materialband (58) besteht, wobei der mittlere Abstand zwischen drittem Heizband (57) und elastischem Materialband (58) gleich gross wie der Abstand der beiden Heizbänder (42,43) auf der ersten Siegeleinrichtung (20) ist.

2. Vorrichtung nach Anspruch 1, dadurch gekennzeichnet, dass zwischen den Trägerkörpern (41,61) und den Heizbändern (42,43,57) je eine elastische Auflagefläche (44) angeordnet ist.

3. Vorrichtung nach Anspruch 2, dadurch gekennzeichnet, dass die elastische Auflagefläche (44) aus Kunststoff, insbesondere aus einem teflonbeschichteten Elastomer oder aus glasfaserverstärktem Kunststoff, besteht.

4. Vorrichtung nach einem der Ansprüche 1 bis 3, dadurch gekennzeichnet, dass auf der zweiten Siegeleinrichtung (21) das elastische Materialband (58) gegenüber dem dritten Heizband (57) vorsteht.

5. Vorrichtung nach einem der Ansprüche 1 bis 4, dadurch gekennzeichnet, dass die Heizbänder (42,43,57) jeweils an mindestens einem ihrer Enden an einer beweglichen Klemmvorrichtung (47,48) befestigt sind, und dass die Klemmvorrichtungen (47,48) mittels Federn (53) gespannt sind.

6. Vorrichtung nach Anspruch 5, dadurch gekennzeichnet, dass die Heizbänder (42,43,57) biegsam sind und jeweils ein Ende der Heizbänder (42,43,57) senkrecht zur Längsausdehnung desselben in die Klemmvorrichtung (47,48) mündet.

7. Vorrichtung nach einem der Ansprüche 1 bis 6, dadurch gekennzeichnet, dass mindestens der eine Trägerkörper (41) gegenüber einem Betätigungselement (37) gefedert ist.

8. Vorrichtung nach einem der Ansprüche 1 bis 7, dadurch gekennzeichnet, dass die Trägerkörper (41,61) eine Bohrung (46) für den Durchfluss eines Kühlmediums aufweisen.

9. Vorrichtung nach einem der Ansprüche 1 bis 8, dadurch gekennzeichnet, dass zwischen den zusammenwirkenden Heizbändern (42,57) beider Siegeleinrichtungen (20,21) ein Führungsmittel (30,31) für den Verschliessstreifen (4) angeordnet ist.

10. Vorrichtung nach einem der Ansprüche 1 bis 9, dadurch gekennzeichnet, dass beide Trägerkörper (41,61) auf einem Schlitten (13) montiert sind, der parallel zur Längserstreckung der Heizbänder (42,43,57) um mindestens die Länge der Heizbänder (42,43,57) verschiebbar gelagert ist.

Fig. 1

Fig. 2

Fig. 3

Fig. 4

EP 0 453 408 A1

Fig. 5

Fig.6

Europäisches
Patentamt

# EUROPÄISCHER RECHERCHENBERICHT

Nummer der Anmeldung

EP 91 81 0275

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 152 998 (LOUBIER) <br> * Ganzes Dokument * <br> --- | 1-3 | B 31 B 19/90 <br> B 29 C 67/22 |
| A | FR-A-2 201 219 (TETRA) <br> * Seite 3, Zeile 22 – Seite 4, Zeile 13; Figur 2 * <br> --- | 1,4,7,8 | |
| A | FR-A-1 525 718 (WINDMÖLLER) <br> * Zusammenfassung; Figuren * <br> --- | 1,9 | |
| A | US-A-3 748 207 (CAMPBELL) <br> * Figuren 12,14 * <br> --- | 5 | |
| A | US-A-3 703 427 (SELLERS) <br> * Zusammenfassung; Figuren * <br> --- | 6 | |
| A | CH-A- 371 986 (NEB) <br> --- | | |
| A | US-A-3 321 353 (ZELNICK) <br> --- | | |
| A | DE-B-1 246 219 (WINDMÖLLER) <br> ----- | | |

RECHERCHIERTE SACHGEBIETE (Int. Cl.5)

B 31 B
B 29 C

Der vorliegende Recherchenbericht wurde für alle Patentansprüche erstellt

| Recherchenort | Abschlußdatum der Recherche | Prüfer |
|---|---|---|
| DEN HAAG | 02-07-1991 | PEETERS S. |

EPO FORM 1503 03.82 (P0403)